# EUROPEAN PATENT SPECIFICATION

(11) **EP 1 516 575 B1**
(45) Date of publication and mention of the grant of the patent: **21.04.2010**
(21) Application number: 04255526.8
(22) Date of filing: 13.09.2004
(51) Int. Cl.: A47L 13/58, A47L 13/59, A47J 47/18

(54) **Bucket for mopping**
Wischmoppbehälter
Chariot pour une essoreuse

(30) Priority: 22.09.2003 GB 0322157
(43) Date of publication of application: 23.03.2005
(73) Proprietor: NUMATIC INTERNATIONAL LIMITED, Camberley, Surrey GU15 3SY (GB)
(72) Inventor: Duncan, Christopher Robert, Chard Somerset TA20 3BH (GB); Phillips, Stephen Basil, Chard Somerset TA20 3BG (GB)
(74) Representative: Brown, Fraser Gregory James

(56) References cited:
- EP-A- 0 684 007
- EP-A- 0 910 983
- EP-A- 1 013 214
- EP-A- 1 234 537
- EP-A- 1 382 535
- WO-A-92/00226
- DE-U1- 9 316 851
- DE-U1- 9 421 373
- LU-A1- 88 687
- US-A- 1 008 856
- US-A- 1 887 071
- US-A- 2 738 531
- US-B1- 6 560 815

## Description

This invention relates to the field of mopping of floors, and concerns in particular a mop bucket for use in the mopping process.

It is known to provide mop buckets having a divider which partitions the bucket into two liquid reservoir regions. The divider is typically a planar plate that extends between opposite sidewalls of the bucket, and divides the volume of the bucket in two. One of the reservoirs serves as a source of clean water for use in the mopping process. A cleaning fluid or detergent may be added to the water in this reservoir. The other reservoir is a receptacle for dirty water expressed from a mop head. The water is typically expressed from the mop head by use of a mop press. The mop press may be a simple sieve plate against which the mop head is pressed, or may be of a type in which the mop head is mechanically squeezed between plates so as to express the water. Many other types of mop press are known. In preferred arrangements, the mop press is mounted on a back wall of the bucket over the waste reservoir, so that water drains from the mop press into the waste reservoir. Clearly, the key advantage of the divided buckets over undivided buckets is that the supply of clean water remains much less contaminated by dirty water used in the mopping process.

Thus the mopping process is more efficient as substantially clean water is used to mop, rather than progressively more dirty water.

EP-A 0910983 discloses a "wringer assembly comprising a wringer cup for a floorcloth centrally located on a bucket with two compartments" that are divided by a partition which is curved in the arc of a circle in the center.

DE-U-9316851 discloses a "bucket" with a partition being insertable into lateral guidings and a floor groove via a hand-hole.

DE-U-9421373 discloses a "cleaning system" whose fluid receptacle comprises a retaining wall for a wet wiping cloth.

The present invention provides an improved mop bucket.

According to one aspect of the invention there is provided a bucket for use in mopping of floors, which bucket is provided with a generally upstanding divider which partitions the bucket into first and second liquid-reservoir regions wherein the divider comprises a plate which deviates from a planar form by projecting as a bulge toward one reservoir region and correspondingly away from the other, wherein the plate is removably disposed in the bucket and so that the plate may be located in the bucket either with the bulge extending toward the first reservoir region or in an alternative arrangement in which the bulge extends toward the second reservoir region and wherein one side portion of the bucket corresponding to the first reservoir is formed with a locally raised edge, which edge is capable of supporting a mop press over the first reservoir.

In a preferred arrangement, a portion of the divider is bowed to have the form of a frusto-dome. An upper edge region of the divider may have a generally curved profile. The curved profile may extend through the divider. The chord of the curve may decrease down toward a lower end region of the divider.

The divider may be formed with a handle. For example, the divider may be formed with a cut-out at an upper end region thereof, the cut out being of a size which permits entry of fingers so as to serve as the handle.

The divider may be removably slidable into retaining channels formed in opposite sidewalls of the bucket. The retaining channels may each be formed by two spaced apart vertically extending ridges, which ridges define khere-between an elongate slot. The sliding fit should, of course, be resistant to the passage of dirt entrained in water, and preferably substantially resistant to the passage of water.

In a preferred arrangement, wherein the divider is generally centrally located in the bucket, but projects toward one reservoir and correspondingly away from the other so that said one reservoir has a lower volume than the other reservoir.

In certain embodiments, the volume of one reservoir is 10 to 14 litres and the volume of the other is 16 to 20 litres. In a preferred embodiment, the volume of one reservoir is 12 litres and the other is 18 litres - as measured up to the top edge of the divider.

Following is a description by way of example only and with reference to the figures of one embodiment of a bucket according to the invention.

In the drawings:
Figure 1 is a perspective view from a front quarter of a bucket according to the present invention.
Figure 2 is a perspective view of the bucket in an alternative configuration.
Figure 3 is a perspective view of the bucket with an mop press mounted thereon.

Figure 4 is a perspective view of the bucket and mop press of figure 3, with the divider and mop press in alternative configurations.

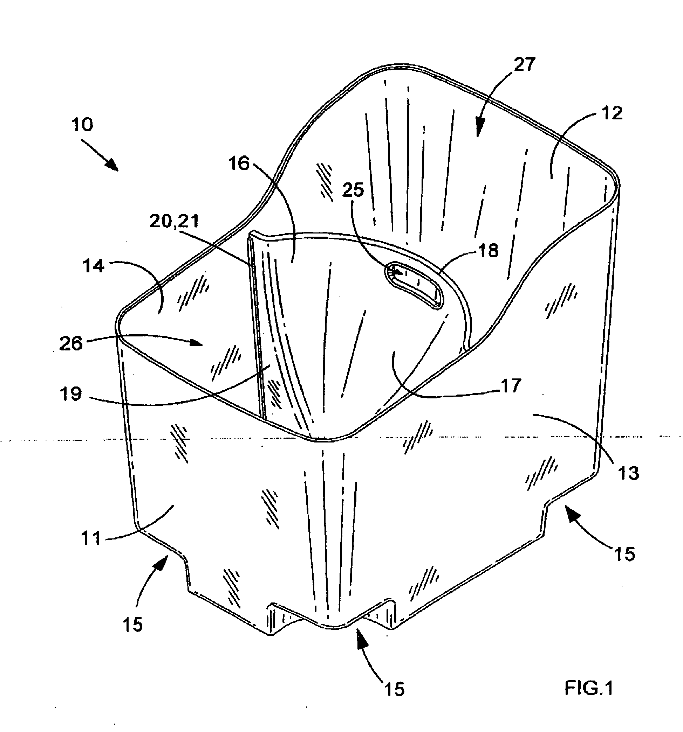

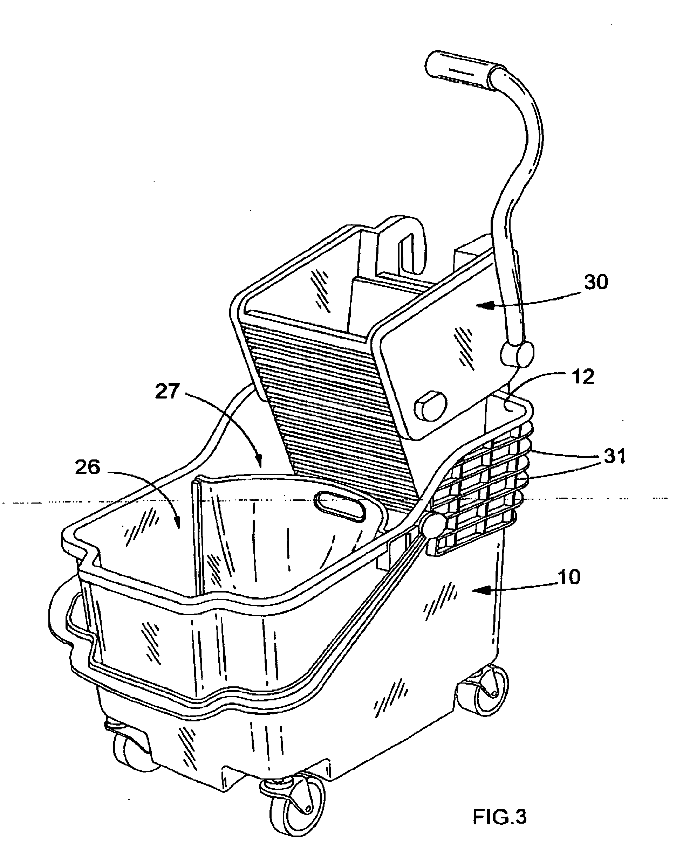

Figure 1 shows a mop bucket 10. The bucket 10 is a moulded unitary article formed from plastics material. The bucket 10 has upstanding front 11, rear 12, and side 13, 14 walls. A bottom wall (not visible) is formed with four comer region recesses 15 for castors (see figure 3).

A divider 16 is a generally planar plate formed of moulded plastics material. The plate is formed with a frusto-dome shaped portion 17 so that an upper edge region 18 of the plate is curved. The curve is tapered towards a lower end of the plate, so that the chord of the curve of the dome reduces towards the lower end of the plate. The plate is located in the bucket 10 by entry of side edge regions 19 of the plate bucket into central vertical upstanding slots formed on an inside surface of each side wall 13, 14. The slots are defined by respective vertically extending spaced apart ridges 20, 21. The slots are sized to provide an intimate sliding fit so as to prevent or reduce the passage of water through the slots. A slot is similarly formed on an upper surface of the bottom wall of the bucket 10, and this receives the lower edge of the divider (not visible).

The slots are centrally located in the bucket 10 between the front 11 and rear 12 walls.

The divider 16 is formed at an upper end region 18 thereof with an elongate cut-out 25 which serves as a handle. This permits removal of the divider 16 from the bucket 10.

With the divider in place 16 , the bucket 10 is partitioned into a front liquid reservoir 26 and a rear liquid reservoir 27. In figure 1, the divider 16 bulges into the rear reservoir 27. Thus the front reservoir 26 has a greater capacity than the rear reservoir 27. The volume of the bulge (i.e from an imaginary uni-planar configuration) is about 3 litres. Thus the front reservoir 26 is enlarged by three litres, and the rear reservoir 27 reduced by three litres. Hence, in this embodiment, the front reservoir 26 has a volume of 18 litres and the rear reservoir 27 a volume of 12 litres.

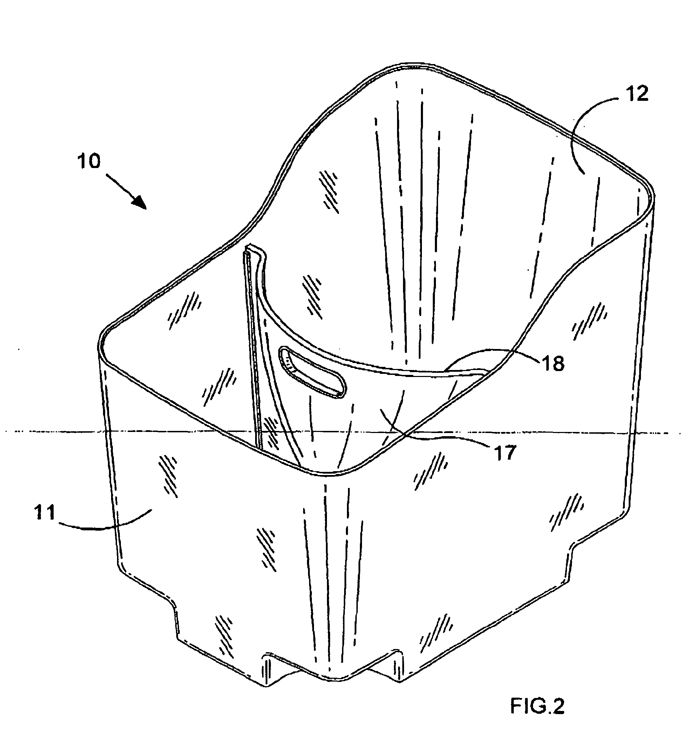

In figure 2, the divider 16 is shown in a reversed configuration, so that the divider 16 bulges into the front reservoir 26. This obviously increases the volume of the rear reservoir 27.

In figure 3, a complete mop bucket is shown in the configuration of figure 1, and with a mop press 30 mounted on a raised and strengthened rear wall 12 of the bucket 10. The wall is strengthened by use of a lattice of ribs 31 as shown in figure 3. In use, a mop head (not shown) is charged with water and cleaning fluid by entry into the larger front reservoir 26 of clean water. After mopping, the mop head, now with dirty water, in entered into the mop press 30 and water is expressed. The water drains into the rear reservoir 27. Naturally, in a normal cleaning process, the amount of water drained from a mop head will always be less than the amount charged into the head. Thus, the divider 16 allows a division of volumes which makes best use of the volume of the bucket 10, in that the amount of clean water is maximized. This makes the mopping more efficient, with fewer breaks to refill the clean water, or empty the waste water.

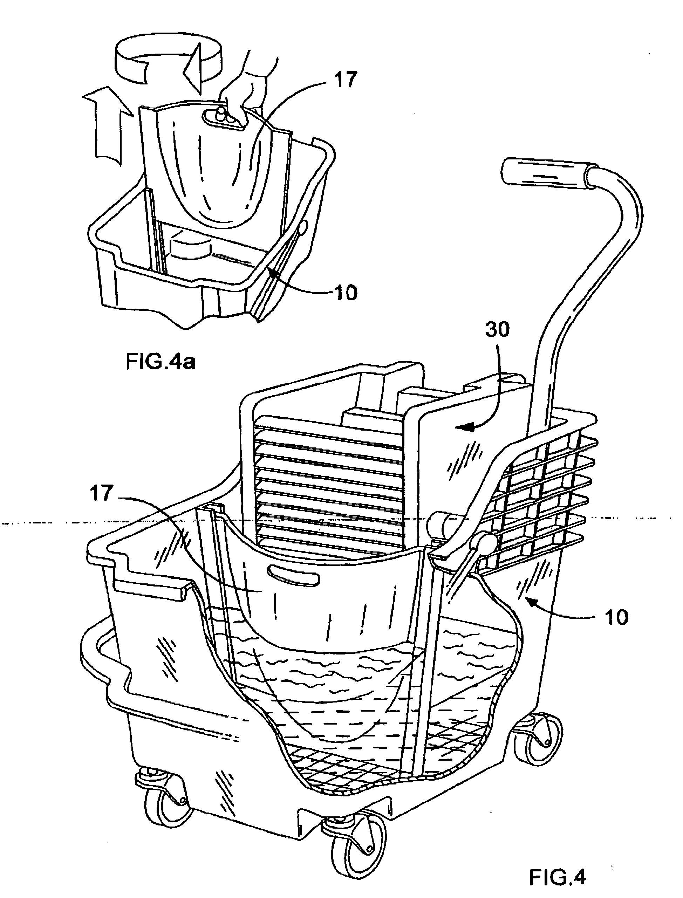

In figure 4, the divider 16 is reversed (as shown in detail figure 4a) to increase the volume of the rear reservoir 27. This allows a mop press 30 to sit lower in the bucket 10, and is thus more stable. This configuration is preferred where the mopping job is small, so smaller volumes of clean water (and waste water) are needed. With less water, the bucket 10 is less stable, so the lower mop press location is preferred.

## Claims

1. A bucket (10) for use in mopping of floors, which bucket (10) is provided with a generally upstanding divider (16) which partitions the bucket (10) into first and second liquid-reservoir regions (26, 27), wherein the divider (16) comprises a plate which deviates from a planar form by projecting as a bulge toward one reservoir region (26/27) and correspondingly away from the other (27/26), wherein the plate is removably disposed in the bucket (10) and so that the plate may be located in the bucket (10) either with the bulge extending toward the first reservoir region (26) or in an alternative arrangement in which the bulge extends toward the second reservoir region (27), and wherein one side portion (12) of the bucket (10) corresponding to the second reservoir (27) is formed with a locally raised edge (12) which edge (12) is capable of supporting a mop press (30) over the second reservoir (27).

2. A bucket (10) as claimed in claim 1 wherein a portion of the divider (16) is bowed to have the form of a frusto-dome (17).

3. A bucket (10) as claimed in claim 1 or claim 2 wherein an upper edge region (18) of the divider (16) has a generally curved profile.

4. A bucket (10) as claimed in claim 3 wherein the curved profile extends through the divider (16).

5. A bucket (10) as claimed in claim 4 wherein the chord of the curve decreases down toward a lower end region of the divider (16).

6. A bucket (10) as claimed in any preceding claim wherein the divider (16) is formed with a handle (25).

7. A bucket (10) as claimed in claim 6 wherein the divider (16) is formed with a cut-out at an upper end region thereof, the cut out being of a size which permits entry of fingers so as to serve as the handle (25).

8. A bucket (10) as claimed in claim 6 wherein the divider is removably slidable into retaining channels formed in opposite sidewalls (13,14) of the bucket (10).

9. A bucket (10) as claimed in claim 8 wherein the retaining channels are each formed by two spaced apart vertically extending ridges (20,21), which ridges (20, 21) define therebetween an elongate slot.

10. A bucket (10) as claimed in any preceding claim, wherein the divider (16) is generally centrally located in the bucket (10), but projects toward one reservoir (26/27) and correspondingly away from the other (27/26) so that said one reservoir (26/27) lower volume than the other reservoir (27/26).

11. A bucket (10) as claimed in claim 10 wherein the volume of one reservoir (26/27) is 10 to 14 litres and the volume of the other (27/26) is 16 to 20 litres.

12. A bucket (10) as claimed in claim 10 wherein the volume of one reservoir (26/27) is 12 litres and the other (27/26) is 18 litres.

## Patentansprüche

1. Ein Eimer (10) zum Verwenden beim Wischen von Böden, während der Eimer (10) bereitgestellt ist mit einer im Wesentlichen hochstehenden Trennwand (16), die den Eimer (10) in erste und zweite Flüssigkeitsreservoirbereiche (26, 27) teilt, während die Trennwand (16) eine Platte umfasst, die von einer ebenen Form durch Hervorstehen als eine Wulst in Richtung eines Reservoirbereichs (26/27) und entsprechend weg von dem anderen (27/26) abweicht, wobei die Platte entfernbar in dem Eimer (10) angeordnet ist und so, dass die Platte in dem Eimer (10) angeordnet werden kann entweder mit der sich in Richtung des ersten Reservoirbereichs (26) erstreckenden Wulst oder in einer alternativen Anordnung mit der sich in Richtung des zweiten Reservoirbereichs (27) erstreckenden Wulst, wobei ein Seitenbereich (12) des Eimers (10), der dem zweiten Reservoir (27) entspricht, mit einem örtlich erhöhten Rand (12) ausgebildet ist, während der Rand (12) geeignet ist, eine Mopppresse (30) über dem zweiten Reservoir (27) zu stützen.

2. Ein Eimer (10) gemäß Anspruch 1, während ein Bereich der Trennwand (16) gebogen ist, um die Form eines Gewölbeabschnitts (17) aufzuweisen.

3. Ein Eimer (10) gemäß Anspruch 1 oder Anspruch 2, während ein oberer Randbereich (18) der Trennwand (16) ein im Wesentlichen gebogenes Profil aufweist.

4. Ein Eimer (10) gemäß Anspruch 3, während das gebogene Profil sich durch die Trennwand (16) erstreckt.

5. Ein Eimer (10) gemäß Anspruch 4, während die Sehne der Kurve in Richtung eines unteren Endbereichs der Trennwand (16) abnimmt.

6. Ein Eimer (10) gemäß einem der vorhergehenden Ansprüche, während die Trennwand (16) mit einem Griff (25) ausgebildet ist.

7. Ein Eimer (10) gemäß Anspruch 6, während die Trennwand (16) mit einer Aussparung an einem oberen Endbereich davon ausgebildet ist, während die Aussparung eine Größe aufweist, die das Eingreifen von Fingern gestattet, um so als der Griff (25) zu dienen.

8. Ein Eimer (10) gemäß Anspruch 6, während die Trennwand entfernbar in Haltekanäle gleitbar ist, die in entgegengesetzten Seitenwänden (13, 14) des Eimers (10) ausgebildet sind.

9. Ein Eimer (10) gemäß Anspruch 8, während die Haltekanäle jeweils durch zwei voneinander beabstandete sich vertikal erstreckende Rippen (20, 21) gebildet werden, während die Rippen (20, 21) einen länglichen Schlitz dazwischen definieren.

10. Ein Eimer (10) gemäß einem der vorhergehenden Ansprüche, während die Trennwand (16) im Allgemeinen mittig in dem Eimer (10) angeordnet ist, allerdings in Richtung eines Reservoirs (26/27) vorsteht und entsprechend weg von dem anderen (27/26), so dass das eine Reservoir (26/27) ein niedrigeres Volumen als das andere Reservoir (27/26) aufweist.

11. Ein Eimer (10) gemäß Anspruch 10, während das Volumen eines Reservoirs (26/27) 10 bis 14 Liter beträgt und das Volumen des anderen (27/26) 16 bis 20 Liter.

12. Ein Eimer (10) gemäß Anspruch 10, während das Volumen eines Reservoirs (26/27) 12 Liter und das des anderen (27/26) 18 Liter beträgt.

## Revendications

1. Seau (10) destiné à être utilisé pour laver les sols à l'aide d'un balai espagnol, lequel seau (10) est prévu avec une cloison généralement verticale (16) qui sépare le seau (10) en première et seconde régions formant réservoirs de liquide (26, 27), dans lequel la cloison (16) comprend une plaque qui dévie d'une forme plane en faisant saillie comme un renflement vers une région formant réservoir (26 / 27) et de manière correspondante à distance de l'autre région (27 / 26), dans lequel la plaque est disposée de manière amovible dans le seau (10) et de sorte que la plaque peut être positionnée dans le seau (10) avec le renflement qui s'étend vers la première région formant réservoir (26) ou dans un agencement en variante dans lequel le renflement s'étend vers la seconde région formant réservoir (27), et dans lequel une partie latérale (12) du seau (10) correspondant au second réservoir (27) est formée avec un bord relevé localement (12), lequel bord (12) peut supporter une pression de balai espagnol (30) sur le second réservoir (27).

2. Seau (10) selon la revendication 1, dans lequel une partie de la cloison (16) est courbée pour avoir la forme d'un dôme tronconique (17).

3. Seau (10) selon la revendication 1 ou la revendication 2, dans lequel une région de bord supérieur (18) de la cloison (16) a un profil généralement incurvé.

4. Seau (10) selon la revendication 3, dans lequel le profil incurvé s'étend à travers la cloison (16).

5. Seau (10) selon la revendication 4, dans lequel la corde de la courbe diminue vers une région d'extrémité inférieure de la cloison (16).

6. Seau (10) selon l'une quelconque des revendications précédentes, dans lequel la cloison (16) est formée avec une poignée (25).

7. Seau (10) selon la revendication 6, dans lequel la cloison (16) est formée avec une découpe au niveau de sa région d'extrémité supérieure, la découpe ayant une taille qui permet le passage des doigts afin de s'en servir de poignée (25).

8. Seau (10) selon la revendication 6, dans lequel la cloison peut coulisser de manière amovible dans des canaux de retenue formés dans des parois latérales opposées (13, 14) du seau (10).

9. Seau (10) selon la revendication 8, dans lequel les canaux de retenue sont chacun formés par deux parties saillantes (20, 21) espacées s'étendant verticalement, lesquelles parties saillantes (20, 21) définissent entre elles une fente allongée.

10. Seau (10) selon l'une quelconque des revendications précédentes, dans lequel la cloison (16) est généralement positionnée au centre dans le seau (10), mais fait saillie vers un réservoir (26 / 27) et de manière correspondante à distance de l'autre réservoir (27 / 26), de sorte que ledit premier réservoir (26 / 27) a un volume inférieur à l'autre réservoir (27 / 26).

11. Seau (10) selon la revendication 10, dans lequel le volume du premier réservoir (26 / 27) est de l'ordre de 10 à 14 litres et le volume de l'autre réservoir (27 / 26) est de l'ordre de 16 à 20 litres.

12. Seau (10) selon la revendication 10, dans lequel le volume du premier réservoir (26 / 27) est de 12 litres et le volume de l'autre réservoir (27 / 26) est de 18 litres.
